# EUROPEAN PATENT APPLICATION

(11) **EP 4 507 418 A1**
(43) Date of publication of application: **12.02.2025**
(21) Application number: 22934377.7
(22) Date of filing: 02.04.2022
(51) Int. Cl.: H04W 72/02, H04B 7/005

(54) **INTERFERENCE SUPPRESSION METHOD AND APPARATUS AND STORAGE MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Dehns Germany Partnerschaft mbB
(86) International application number: PCT/CN2022/085143
(87) International publication number: WO 2023/184550

(57) **Abstract**

The present disclosure provides an interference suppression method and apparatus and a storage medium. The interference suppression method comprises: performing uplink transmission in a downlink time slot by using first uplink transmit power, the first uplink transmit power being maximum uplink transmit power supported and used by a terminal under a first power level corresponding to the type of the terminal; or increasing the transmit power level of the terminal from the first power level to a second power level; and performing uplink transmission in the downlink time slot on the basis of the second power level. According to the present disclosure, the power of uplink transmission of the terminal is increased, such that when a full-duplex terminal performs uplink transmission in a downlink time slot, downlink self-interference from a serving base station and cross time slot interference from an adjacent base station of the serving base station are reduced, the reliability of uplink transmission is improved, and the feasibility of enhancing full-duplex communication is improved.

## Description

### TECHNICAL FIELD

The present disclosure relates to the field of communication, and in particular, to an interference suppression method and apparatus, and a storage medium.

### BACKGROUND

In Release-18 duplex enhancement project, an enhanced full-duplex solution will be studied, and specifically, a network device can simultaneously transmit data and receive data in one slot.

Currently, 3GPP (3rd Generation Partnership Project) determines that the full-duplex enhancement of Rel -18 is only for gNB (base station), while a terminal side supports only half-duplex. The base station may configure an uplink (UL) subband for uplink data transmission in a downlink (DL) slot for an enhanced (division duplex, full-duplex) terminal, and schedule uplink data transmission of the terminal in a time-frequency range of the UL subband.

Considering that enhanced full-duplex capability requires uplink transmission in a DL slot, the uplink transmission will suffer from self-interference with the downlink transmission of the base station and downlink co-channel interference from a neighboring base station. Due to high power of downlink transmission of the base station, serious cross-slot interference will be caused, which greatly affects performance of uplink transmission. There is currently no clear solution for suppressing self-interference from a serving cell and downlink interference from a neighboring cell.

### SUMMARY

To solve problems existing in related technologies, embodiments of the present disclosure provide an interference suppression method and apparatus, and a storage medium.

According to a first aspect of embodiments of the present disclosure, an interference suppression method is provided, performed by a terminal, including:
performing uplink transmission in a downlink slot by using first uplink transmit power, where the first uplink transmit power is maximum uplink transmit power supported by the terminal at a first power class corresponding to a type of the terminal; or
increasing a transmit power class of the terminal from a first power class to a second power class; and
performing uplink transmission in a downlink slot based on the second power class.

Optionally, when the first uplink transmit power is used, the method further includes:
receiving first signaling, sent by a base station, for performing uplink transmit power adjustment;
adjusting, based on the first signaling, second uplink transmit power used for uplink transmission in a specified slot, where the specified slot includes the downlink slot for uplink transmission.

Optionally, the method further includes:
determining, based on second signaling sent by the base station, that the downlink slot for uplink transmission is not considered when the uplink transmit power adjustment is performed based on the first signaling; or
determining, based on second signaling sent by the base station, that every slot related to uplink transmission is considered when the uplink transmit power adjustment is performed based on the first signaling.

Optionally, the second signaling includes any one of:
downlink control information (DCI), media access control (MAC) control element (CE), and radio resource control (RRC) signaling.

Optionally, the first uplink transmit power is less than second uplink transmit power, and the second uplink transmit power is maximum uplink transmit power supported by the terminal at a second power class.

According to a second aspect of embodiments of the present disclosure, an interference suppression method is provided, performed by a terminal, including:
not expecting sending data or receiving data on a guard band in a downlink slot for performing uplink transmission, where the guard band is between an uplink frequency-domain resource and a downlink frequency-domain resource in the downlink slot.

Optionally, the method further includes:
determining a frequency-domain resource occupied by the guard band in the downlink slot based on a protocol; or
determining, based on indication of radio resource control (RRC) signaling sent by a base station, a frequency-domain resource occupied by the guard band in the downlink slot.

According to a third aspect of embodiments of the present disclosure, an interference suppression method is provided, performed by a base station, including:
receiving uplink information sent by a terminal in a downlink slot by using first uplink transmit power, where the first uplink transmit power is maximum uplink transmit power supported by the terminal at a first power class corresponding to a type of the terminal; or
receiving uplink information sent by a terminal in a downlink slot based on a second power class after a transmit power class of the terminal is increased from a first power class to the second power class.

Optionally, the method further includes:
sending first signaling to the terminal, where the first signaling indicates the terminal to adjust second uplink transmit power used for uplink transmission in a specified slot, and the specified slot includes the downlink slot for uplink transmission.

Optionally, the method further includes:
sending second signaling to the terminal, where the second signaling indicates the terminal to perform the uplink transmit power adjustment based on the first signaling without considering the downlink slot for uplink transmission, or perform the uplink transmit power adjustment based on the first signaling by considering every slot related to uplink transmission.

Optionally, the second signaling includes any one of:
downlink control information (DCI), media access control (MAC) control element (CE), and radio resource control (RRC) signaling.

Optionally, the first uplink transmit power is less than second uplink transmit power, and the second uplink transmit power is maximum uplink transmit power supported by the terminal at a second power class.

According to a fourth aspect of embodiments of the present disclosure, an interference suppression method is provided, performed by a base station, including:
not sending data or not receiving data on a guard band in a downlink slot for performing uplink transmission, where the guard band is between an uplink frequency-domain resource and a downlink frequency-domain resource in the downlink slot.

Optionally, the method further includes:
determining a frequency-domain resource occupied by the guard band in the downlink slot based on a protocol; or
sending a radio resource control (RRC) signaling to a terminal, where the RRC signaling indicates a frequency-domain resource occupied by a guard band in the downlink slot to the terminal.

According to a fifth aspect of embodiments of the present disclosure, an interference suppression apparatus is provided, applied to a terminal, including:
a first transmitting module, configured to perform uplink transmission in a downlink slot by using first uplink transmit power, where the first uplink transmit power is maximum uplink transmit power supported by the terminal at a first power class corresponding to a type of the terminal; or
a power-class increasing module, configured to increase a transmit power class of the terminal from a first power class to a second power class; and
a second transmitting module, configured to perform uplink transmission in a downlink slot based on the second power class.

According to a sixth aspect of embodiments of the present disclosure, an interference suppression apparatus is provided, applied to a terminal, including:
a determining module, configured to not expect sending data or receiving data on a guard band in a downlink slot for performing uplink transmission, where the guard band is between an uplink frequency-domain resource and a downlink frequency-domain resource in the downlink slot.

According to a seventh aspect of embodiments of the present disclosure, an interference suppression apparatus is provided, applied to a base station, including:
a first receiving module, configured to receive uplink information sent by a terminal in a downlink slot by using first uplink transmit power, where the first uplink transmit power is maximum uplink transmit power supported by the terminal at a first power class corresponding to a type of the terminal; or
a second receiving module, configured to receive uplink information sent by a terminal in a downlink slot based on a second power class after a transmit power class of the terminal is increased from a first power class to the second power class.

According to an eighth aspect of embodiments of the present disclosure, an interference suppression apparatus is provided, applied to a base station, including:
a controlling module, configured to not send data or not receive data on a guard band in a downlink slot for performing uplink transmission, where the guard band is between an uplink frequency-domain resource and a downlink frequency-domain resource in the downlink slot.

According to a ninth aspect of embodiments of the present disclosure, a computer-readable storage medium is provided, where the storage medium stores a computer program, and the computer program is used to perform the interference suppression method according to any one of the above terminal side.

According to a tenth aspect of embodiments of the present disclosure, a computer-readable storage medium is provided, where the storage medium stores a computer program, and the computer program is used to perform the interference suppression method according to any one of the above base station side.

According to an eleventh aspect of embodiments of the present disclosure, an interference suppression device is provided, including:
a processor; and
a memory for storing a processor-executable instruction;
where the processor is configured to perform the interference suppression method according to any one of the above terminal side.

According to a twelfth aspect of embodiments of the present disclosure, an interference suppression device is provided, including:
a processor; and
a memory for storing a processor-executable instruction;
where the processor is configured to perform the interference suppression method according to any one of the above base station side.

The technical solutions provided by the embodiments of the present disclosure may include following beneficial effects:

According to the present disclosure, when an enhanced full-duplex terminal performs uplink transmission in a downlink slot, downlink self-interference from a serving base station and cross slot interference from an adjacent base station of the serving base station are effectively reduced, the reliability of uplink transmission is improved, and the feasibility of enhanced full-duplex communication is improved.

It should be understood that the above general description and the following detailed description are only examples and illustrative, and do not limit the present disclosure.

### BRIEF DESCRIPTION OF DRAWINGS

The accompanying drawings, which are incorporated in and constitute a part of this specification, illustrate embodiments consistent with the present disclosure, and together with the description serve to explain the principles of the present disclosure.
FIG. 1 is a schematic diagram of an interference scenario according to an example embodiment.
FIG. 2A is a schematic flowchart of an interference suppression method according to an example embodiment.
FIG. 2B is a schematic flowchart of another interference suppression method according to an example embodiment.
FIG. 3 is a schematic flowchart of another interference suppression method according to an example embodiment.
FIG. 4A is a schematic flowchart of another interference suppression method according to an example embodiment.
FIG. 4B is a schematic diagram of guard band setting according to an example embodiment.
FIG. 5A is a schematic flowchart of an interference suppression method according to an example embodiment.
FIG. 5B is a schematic flowchart of another interference suppression method according to an example embodiment.
FIG. 6 is a schematic flowchart of another interference suppression method according to an example embodiment.
FIG. 7 is a schematic flowchart of another interference suppression method according to an example embodiment.
FIG. 8A to FIG. 8C are schematic diagrams showing frequency-domain resources of DL transmission and UL transmission according to an example embodiment.
FIG. 9 is a schematic diagram of a power control manner according to an example embodiment.
FIG. 10A is a block diagram of an interference suppression apparatus according to an example embodiment.

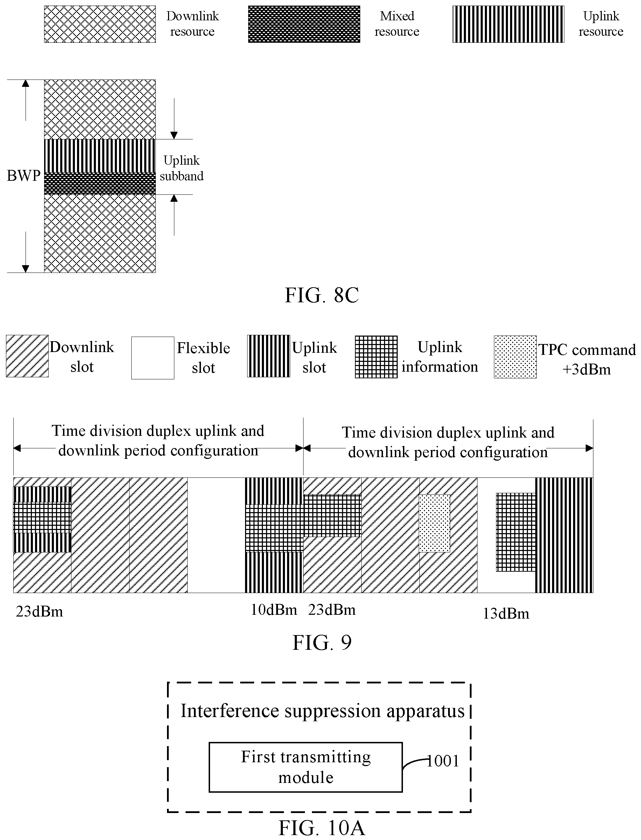

FIG. 10A is a block diagram of another interference suppression apparatus according to an example embodiment.

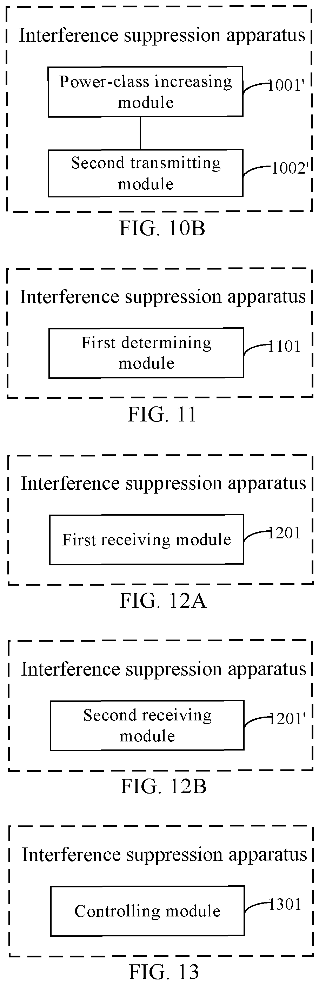

FIG. 11 is a block diagram of another interference suppression apparatus according to an example embodiment.
FIG. 12A is a block diagram of another interference suppression apparatus according to an example embodiment.
FIG. 12B is a block diagram of another interference suppression apparatus according to an example embodiment.
FIG. 13 is a block diagram of another interference suppression apparatus according to an example embodiment.

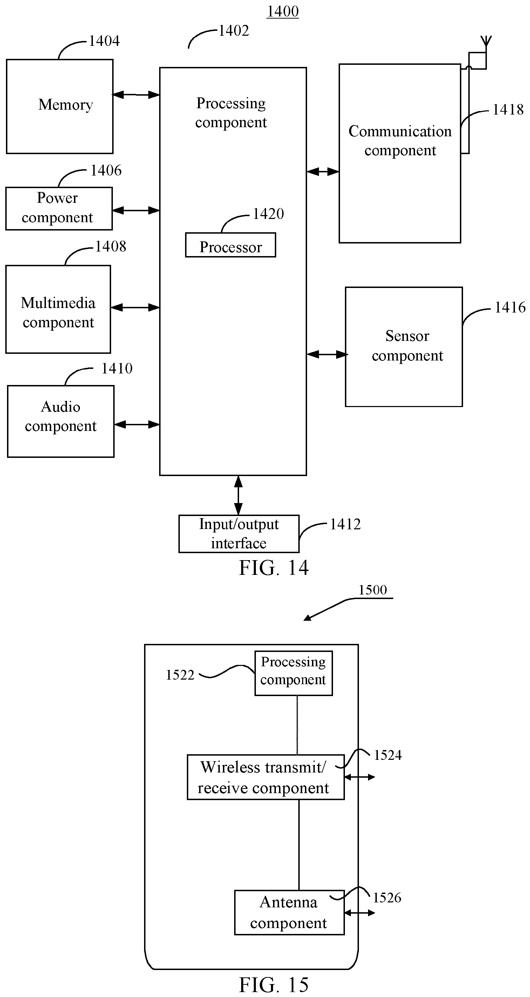

FIG. 14 is a schematic structural diagram of an interference suppression device according to an example embodiment of the present disclosure.
FIG. 15 is a schematic structural diagram of another interference suppression device according to an example embodiment of the present disclosure.

### DETAILED DESCRIPTION

Example embodiments will be described in detail herein, examples of which are illustrated in the accompanying drawings. When following description refers to the drawings, unless otherwise indicated, same numerals in different drawings indicate same or similar elements. The embodiments described in the following example embodiments do not represent all embodiments consistent with the present disclosure. Rather, they are merely examples of apparatuses and methods consistent with some aspects of the present disclosure as detailed in the appended claims.

The terminology used in the present disclosure is for the purpose of describing particular embodiments only and is not intended to limit the present disclosure. The singular forms "a / an ,'''' the ," and "said " used in the present disclosure and the appended claims are also intended to include plural forms unless the context clearly indicates other meanings. It should also be understood that the term "and / or " as used herein refers to and includes any or all possible combinations of at least one associated listed item.

It should be understood that although the terms "first," "second," "third," etc., may be used in the present disclosure to describe various information, these information should not be limited to these terms. These terms are only used to distinguish a same type of information from each other. For example, "first information" may also be referred to as "second information" without departing from the scope of the present disclosure, and similarly, the "second information" may also be referred to as "first information". Depending on context, the word "if" as used herein may be interpreted as" when " or "upon " or" in response to determining ".

Duplex mode enhancement is an important content of 3GPP Rel-18 research, and a main idea thereof is to transmit data and receive data simultaneously in one slot. In order to minimize impact on complexity and radio frequency of terminals, a current consensus is to define researches of duplex mode enhancement in a base station side in a first stage, that is, only the base station side supports the enhanced full-duplex, for example, Cross Division Duplex, or xDD.

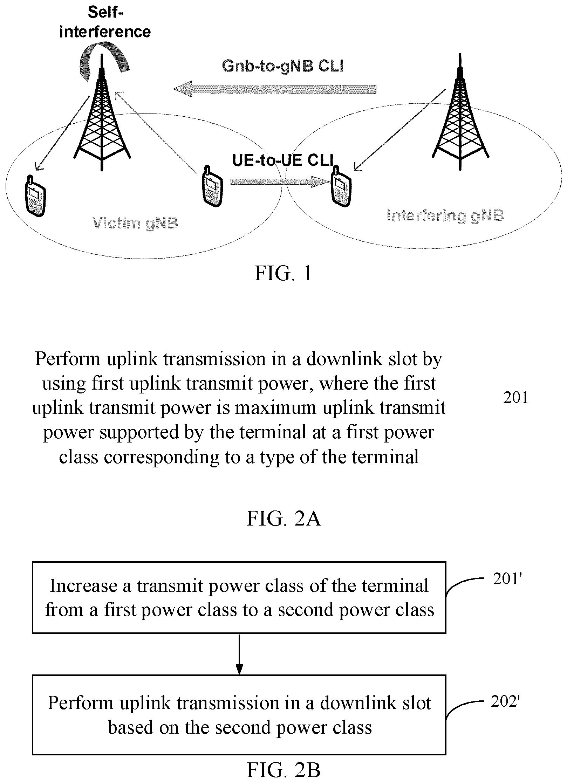

There are multiple interference types in an enhanced full-duplex system. As shown in FIG. 1, the types include:
self-interference between uplink and downlink transmissions of a base station;
gNB-to-gNB (inter-base station) cross-slot interference of other base stations;
UE-to-UE (inter-terminal) cross-slot interference of other terminals;
the gNB-to-gNB cross-slot interference of other base stations appears to be strong, which will greatly affect transmission performance of the enhanced full-duplex system.

In a current protocol, a UL (uplink) BWP (bandwidth part) can only be configured in a UL slot. That is, there is no UL BWP configured in a DL (downlink) slot. That is, a current system is devoid of following two types of interference:
the self-interference between uplink and downlink transmissions of the base station; and the gNB-to-gNB cross-slot interference on a same carrier from other base stations.

In researches of Rel-16 (Release-16) CLI (Cross Link Interference), 3GPP has studied dynamic TDD (Time Division Duplex) scenarios. Studies have shown that even in an adjacent scenario, DL-to-UL cross-slot interference may cause serious performance deterioration in most scenarios, resulting in failure of normal work. However, there is no standard interference suppression manners in the current protocol, while only a related recommendation for applying dynamic TDD is provided. That is, there is currently no manner for CLI suppression.

In order to solve the above technical problem, the present disclosure provides a following interference suppression method, in a manner stipulated in the protocol, which can effectively suppress interference from downlink transmission of a serving cell or an adjacent cell to an uplink sub-band for uplink transmission in a downlink slot. Firstly, an interference suppression method provided by the present disclosure will be described from a terminal side.

In a first manner, transmit power of uplink transmission is increased.

An embodiment of the present disclosure provides an interference suppression method. Referring to FIG. 2A, FIG. 2A is a flowchart of an interference suppression method according to an embodiment. The method may be performed by a terminal, and include following steps.

In step 201, performing uplink transmission in a downlink slot by using first uplink transmit power, where the first uplink transmit power is maximum uplink transmit power supported by the terminal at a first power class corresponding to a type of the terminal.

In the embodiment of the present disclosure, the first uplink transmit power is maximum uplink transmit power supported by the terminal at a first power class corresponding to a type of the terminal.

For example, the protocol has defined transmit power classes (levels) of various terminals and maximum uplink transmit power corresponding to different power classes, as shown in Table 1.

**Table 1**

| Class 1(decibel milliwatts, dBm) | Class 1.5 (dBm) | Class 2 (dBm) | Class 3 (dBm) |
|---|---|---|---|
| 31 | 29 | 26 | 23 |

Assuming that a terminal uses a power class 3 by default, maximum uplink transmit power correspondingly supported at the power class 3 is 23 dBm (decibel milliwatts), and the first uplink transmit power is hence 23 dBm. That is, the terminal performs uplink transmission at full power in the downlink slot.

In the above embodiment, the terminal may increase transmit power of uplink transmission, and when an enhanced full-duplex terminal performs uplink transmission in a downlink slot, the terminal increases uplink transmit power of valid signals, thereby reducing downlink self-interference of a serving base station and cross-slot interference of an adjacent base station of the serving base station, avoiding a problem of uplink transmission failure, improving reliability of uplink transmission, and improving feasibility of enhanced full-duplex communication.

An embodiment of the present disclosure provides an interference suppression method. Referring to FIG. 2B, FIG. 2B is a flowchart of an interference suppression method according to an embodiment. The method may be performed by a terminal, and include following steps.

In step 201', increasing a transmit power class of the terminal from a first power class to a second power class.

In the embodiment of the present disclosure, if the terminal supports uplink transmission in a downlink slot, the terminal is determined to be a terminal with a high power class. The uplink transmission may be performed in the downlink slot by using a transmit power greater than a current maximum transmit power. The terminal may determine a first power class corresponding to a type of the terminal. Further, the terminal can increase the transmit power class of its own from a first power class to a second power class, and then perform uplink transmission in the downlink slot based on the second power class. Optionally, the first uplink transmit power is less than second uplink transmit power, and the second uplink transmit power is maximum uplink transmit power supported by the terminal at a second power class. That is, the maximum uplink transmit power of the terminal for uplink transmission is no longer limited to the first uplink transmit power supported at the first power class, but is increased to the second uplink transmit power supported at the second power class. In a possible implementation, transmit power classes of the terminal is shown in Table 1. The terminal determines that the power class corresponding to the type of the terminal is class 3, and in the embodiment of the present disclosure, the terminal may perform uplink transmission in the downlink slot by using class 1, class 1.5, or class 2 in Table 1.

In another possible implementation, if the terminal determines that the power class corresponding to the type of the terminal is class 3, a new transmit power class may be defined in the protocol, and maximum uplink transmit power corresponding to the new transmit power class is greater than 23 dBm, the terminal may determine the new transmit power class n as the second power class, and the terminal may perform uplink transmission in the downlink slot based on the power class n.

In step 202', performing uplink transmission in a downlink slot based on the second power class.

According to the embodiment, the terminal can increase the power class of its own, and when an enhanced full-duplex terminal performs uplink transmission in a downlink slot, downlink self-interference from a serving base station and cross slot interference from an adjacent base station of the serving base station are reduced, uplink transmission failure is effectively avoided, the reliability of uplink transmission is improved, and the feasibility of enhanced full-duplex communication is improved.

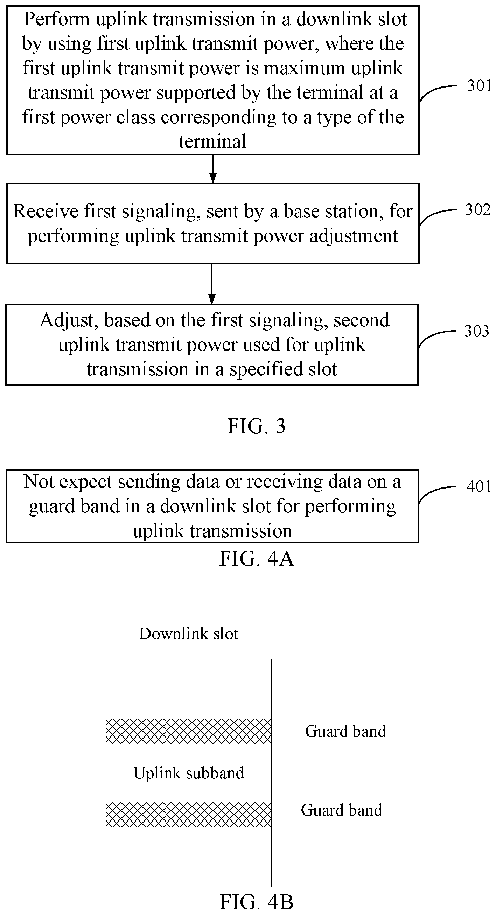

In some optional embodiments, referring to FIG. 3, FIG. 3 is a flowchart of an interference suppression method according to an embodiment. The method may be performed by a terminal, and include following steps.

In step 301, performing uplink transmission in a downlink slot by using first uplink transmit power, where the first uplink transmit power is maximum uplink transmit power supported by the terminal at a first power class corresponding to a type of the terminal.

In step 302, receiving first signaling, sent by a base station, for performing uplink transmit power adjustment.

In an embodiment of the present disclosure, the first signaling may be a TPC (transmit power control) command.

In step 303, adjusting, based on the first signaling, second uplink transmit power used for uplink transmission in a specified slot.

In a possible implementation, the specified slot includes an uplink slot. When the terminal adjust the uplink transmit power based on the first signaling, the terminal may not consider a downlink slot for uplink transmission. The terminal performs uplink transmit power adjustment based on the first signaling only in uplink slots (or uplink symbols).

In an embodiment of the present disclosure, the terminal may use full power for uplink transmission in the downlink slot for uplink transmission based on the power adjustment manner provided by the present disclosure, and still operate according to a conventional UL PC (Power Control) mechanism in the uplink slots or the uplink symbols.

In another possible implementation, the specified slot includes an uplink slot and a downlink slot for uplink transmission.

In other words, when performing uplink transmit power adjustment based on the first signaling, the terminal needs to consider every slot related to uplink transmission.

In a possible implementation, the base station provides two mechanisms for determining uplink transmit power.

Mechanism 1: uplink transmission is performed always at full power (that is, first uplink transmit power) in a downlink slot for uplink transmission. That is, when performing uplink power adjustment, the terminal does not consider uplink transmission in the downlink slot.

Mechanism 2: the uplink transmit power is determined according to base station configuration and the TPC command, that is, every slot related to uplink transmission needs to be considered when the terminal performs uplink power adjustment, that is, all uplink transmissions are considered.

When transmitting at full power, the terminal may determine, based on the second signaling sent by the base station, whether to perform uplink power control by using the mechanism 1 or the mechanism 2. The second signaling includes but is not limited to DCI (Downlink Control Information), MAC (Media Access Control) CE (Control Element), RRC (Radio Resource Control) signaling, etc., which is not limited in the present disclosure.

In the above embodiment, the terminal may flexibly switch between the two mechanisms, thereby effectively improving reliability of uplink transmission and improving feasibility of enhanced full-duplex communication.

In a second manner, a guard band is defined between an uplink frequency-domain resource and a downlink frequency-domain resource in a downlink slot.

Referring to FIG. 4A, FIG. 4A is a flowchart of an interference suppression method according to an embodiment. The method may be performed by a terminal, and include following steps.

In step 401, not expecting sending data or receiving data on a guard band in a downlink slot for performing uplink transmission.

In an embodiment of the present disclosure, the guard band is between an uplink frequency-domain resource and a downlink frequency-domain resource in the downlink slot, as shown in FIG. 4B. The terminal does not expect to send data or receive data on the guard band.

In a possible implementation, the terminal may determine, based on a protocol, a frequency-domain resource occupied by the guard band in the downlink slot.

In another possible implementation, the terminal may determine, based on indication of radio resource control (RRC) signaling sent by a base station, a frequency-domain resource occupied by the guard band in the downlink slot. Accordingly, definition of the guard band is related to capability of the base station.

According to the above embodiment, the guard band can be set, and when an enhanced full-duplex terminal performs uplink transmission in a downlink slot, downlink self-interference from a serving base station and cross slot interference from an adjacent base station of the serving base station are effectively reduced, the reliability of uplink transmission is improved, and the feasibility of enhanced full-duplex communication is improved.

It should be noted that the above two manners may be implemented separately or in combination, which is not limited in the present disclosure.

The interference suppression method provided by the present disclosure will then be described from a base station side.

In a first manner, transmit power of uplink transmission is increased.

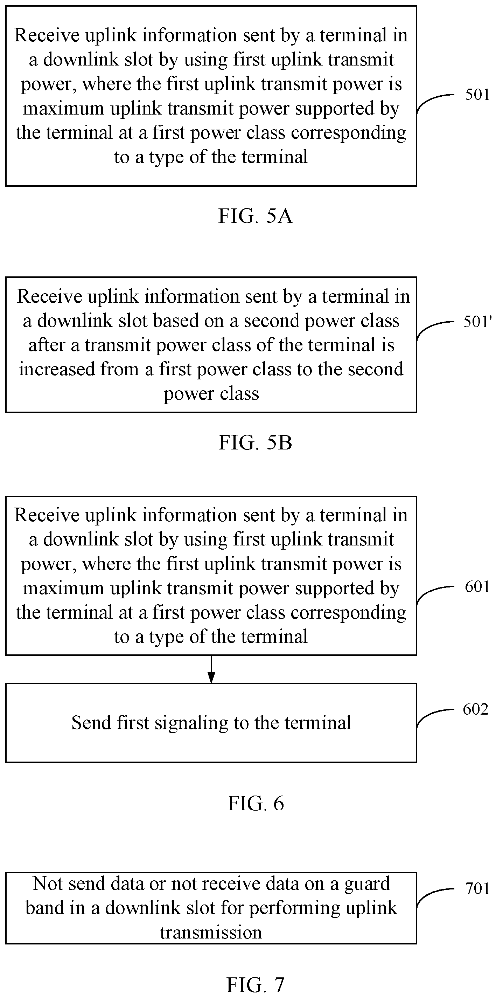

An embodiment of the present disclosure provides an interference suppression method. Referring to FIG. 5A, FIG. 5A is a flowchart of an interference suppression method according to an embodiment. The method may be performed by a base station, and include following steps.

In step 501, receiving uplink information sent by a terminal in a downlink slot by using first uplink transmit power, where the first uplink transmit power is maximum uplink transmit power supported by the terminal at a first power class corresponding to a type of the terminal.

In an embodiment of the present disclosure, the base station may receive uplink information transmitted by the terminal at full power. The power control manner on the terminal side has been described in the above embodiments, and details will not be repeated herein.

In the above embodiment, the base station may receive uplink information sent at full power by the terminal, thereby effectively avoiding uplink transmission failure, improving reliability of uplink transmission, and improving feasibility of full-duplex communication.

An embodiment of the present disclosure provides an interference suppression method. Referring to FIG. 5B, FIG. 5B is a flowchart of an interference suppression method according to an embodiment. The method may be performed by a base station, and include following steps.

In step 501', receiving uplink information sent by a terminal in a downlink slot based on a second power class after a transmit power class of the terminal is increased from a first power class to the second power class.

In the embodiments of the present disclosure, if the terminal supports uplink transmission in a downlink slot, the terminal determines itself as belonging to a high power class, and after increasing transmit power of the terminal itself, the terminal performs uplink transmission in the downlink slot, and the base station receives uplink information sent by the terminal in the downlink slot after increasing the terminal's transmit power class.

The first uplink transmit power is less than second uplink transmit power, and the second uplink transmit power is maximum uplink transmit power supported by the terminal at a second power class. The specific power control manner on the terminal side has been described in the above embodiments, and details will not be repeated herein.

In the above embodiment, uplink transmission failure can be effectively avoided, reliability of uplink transmission is improved, and feasibility of full-duplex communication is improved.

In some optional embodiments, referring to FIG. 6, FIG. 6 is a flowchart of an interference suppression method according to an embodiment. The method may be performed by a base station, and include following steps.

In step 601, receiving uplink information sent by a terminal in a downlink slot by using first uplink transmit power, where the first uplink transmit power is maximum uplink transmit power supported by the terminal at a first power class corresponding to a type of the terminal.

In an embodiment of the present disclosure, the base station may receive uplink information transmitted by the terminal at full power. The power control manner on the terminal side has been described in the above embodiments, and details will not be repeated herein.

In step 602, sending first signaling to the terminal.

In an embodiment of the present disclosure, the first signaling may be a TPC command indicating the terminal to adjust second uplink transmit power used when performing uplink transmission in a specified slot, where the specified slot includes a downlink slot for performing uplink transmission.

In addition, the base station may further indicate, by using second signaling, the terminal to switch between mechanism 1 and mechanism 2. Mechanism 1: uplink transmission is performed always at full power (that is, first uplink transmit power) in a downlink slot for uplink transmission. That is, when performing uplink power adjustment, the terminal does not consider uplink transmission sent in the downlink slot. Mechanism 2: the uplink transmit power is determined according to base station configuration and the TPC command, that is, every slot related to uplink transmission needs to be considered when the terminal performs uplink power adjustment, that is, all uplink transmissions are considered.

The second signaling includes but is not limited to DCI, MAC CE, RRC signaling, etc., which is not limited in the present disclosure.

In the above embodiment, the base station may control, by using the first signaling, the terminal to perform uplink transmit power adjustment, and control, by using the second signaling, the terminal to switch between the above two mechanisms.

In a second manner, a guard band is defined between an uplink frequency-domain resource and a downlink frequency-domain resource in a downlink slot.

An embodiment of the present disclosure provides an interference suppression method. Referring to FIG. 7, FIG. 7 is a flowchart of an interference suppression method according to an embodiment. The method may be performed by a base station, and include following steps.

In step 701, not sending data or not receiving data on a guard band in a downlink slot for performing uplink transmission.

The guard band is between the uplink frequency-domain resource and the downlink frequency-domain resource in the downlink slot.

In a possible implementation, the base station may determine, based on a protocol, a frequency-domain resource occupied by the guard band in the downlink slot.

In another possible implementation, the base station may configure, based on a capability of the base station itself, a frequency-domain resource occupied by the guard band, and notify the terminal of the frequency-domain resource by using radio resource control (RRC) signaling, so that the terminal determines the frequency-domain resource occupied by the guard band in the downlink slot.

According to the above embodiment, the guard band can be set, and when an enhanced full-duplex terminal performs uplink transmission in a downlink slot, downlink self-interference from a serving base station and cross slot interference from an adjacent base station of the serving base station are reduced, the reliability of uplink transmission is improved, and the feasibility of enhanced full-duplex communication is improved.

It should be noted that the above two manners may be implemented separately or in combination, which is not limited in the present disclosure.

The interference suppression method provided by the present disclosure is further described with reference to examples below.

Embodiment 1: assuming that the terminal is a terminal of Rel -18 and subsequent versions, and has a half-duplex capability or an enhanced full-duplex capability, which is not limited in the present disclosure. Assuming that the base station performs an enhanced full-duplex operation in a downlink slot of a time division duplex (TDD) frequency band, that is, schedules downlink data and uplink data simultaneously. When the base station side performs the enhanced full-duplex operation, one of following manners is adopted, which is not limited in the present disclosure.

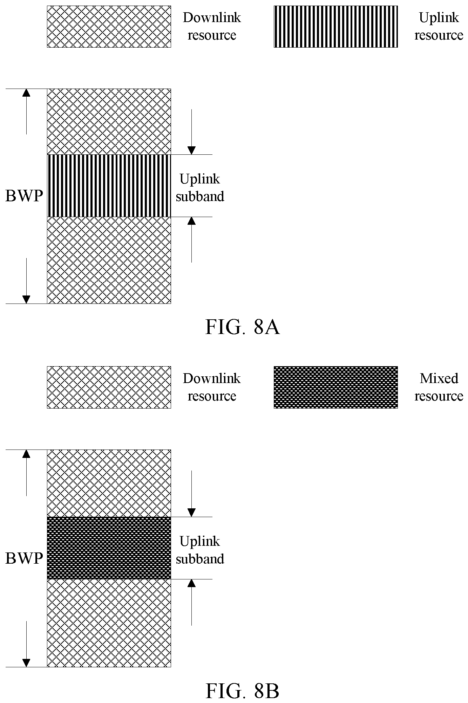

Frequency-domain resources used for DL transmission and UL transmission in the DL slot are independent of each other without overlapping, for example, as shown in FIG. 8A.

Frequency-domain resources used for DL transmission and UL transmission in the DL slot completely are completely overlapped, for example, as shown in FIG. 8B.

Frequency-domain resources used for DL transmission and UL transmission in the DL slot are partially overlapped, for example, as shown in FIG. 8C.

In this embodiment, assuming that resources for uplink transmission and resources for downlink transmission in the DL slot do not overlap in frequency-domain, for example, as shown in FIG. 8A. For a terminal performing uplink transmission on an UL subband, the terminal may suffer from following two types of strong downlink interference: self-interference of downlink transmission from a current cell; and cross-slot interference of downlink transmission from an adjacent cell.

The interference situation can be simplified as SINR = S/(N + I_{Self} + I_{CLI}). S represents valid signal power, N represents system noise, I_{Self} represents self-interference of the present cell, and I_{CLI} represents cross-slot interference from an adjacent cell. In order to increase SINR (Signal to Interference plus Noise Ratio) of valid signals, in this embodiment, the uplink transmit power may be increased, specifically, the terminal capable of performing uplink transmission in the DL slot is defined as a high-power terminal, that is, the uplink may be sent at a power greater than the current maximum transmit power.

In the current protocol, various power classes are defined, as shown in Table 1. In general, a default terminal power class is class 3, and the above power classes are related to a terminal type. For example, a class 1 terminal is a non-handheld terminal.

The maximum uplink transmit power supported by the terminal at class 3 is the first uplink transmit power, which is specifically 23 dBm.

In this embodiment, the high power class terminal may be defined by, but not limited to, the following two manners, so as to achieve interference suppression.

Manner 1: if the terminal is an enhanced full-duplex capability terminal that can perform uplink transmission in a DL slot, the terminal is a class 1 terminal, a class 1.5 terminal, or a class 2 terminal by default in Table 1.

Manner 2: if the terminal is an enhanced full-duplex capability terminal that can perform uplink transmission in a DL slot, a new power class is defined for the terminal, maximum uplink transmit power supported by the terminal at the new power class is second uplink transmit power, and the second uplink transmit power needs to be greater than 23 dBm.

Embodiment 2: assuming that the terminal is a terminal of Rel -18 and subsequent versions, and has a half-duplex capability or an enhanced full-duplex capability, which is not limited in the present disclosure. Assuming that the base station performs an enhanced full-duplex operation in a downlink slot of a time division duplex (TDD) frequency band, that is, schedules downlink data and uplink data simultaneously. When the base station side performs the enhanced full-duplex operation, one of following manners is adopted, which is not limited in the present disclosure.

Frequency-domain resources used for DL transmission and UL transmission in the DL slot are independent of each other without overlapping, for example, as shown in FIG. 8A.

Frequency-domain resources used for DL transmission and UL transmission in the DL slot completely coincide, for example, as shown in FIG. 8B;

Frequency-domain resources used for DL transmission and UL transmission in the DL slot are partially overlapped, for example, as shown in FIG. 8C.

In this embodiment, assuming that resources for uplink transmission and resources for downlink transmission in the DL slot do not overlap in frequency-domain, for example, as shown in FIG. 8A. For a terminal performing uplink transmission on an UL subband, the terminal may suffer from following two types of strong downlink interference: self-interference of downlink transmission from a current cell; and cross-slot interference of downlink transmission from an adjacent cell.

The interference situation can be simplified as SINR = S/(N + I_{Self} + I_{CLI}). S represents valid signal power, N represents system noise, I_{Self} represents self-interference of the present cell, and I_{CLI} represents cross-slot interference from an adjacent cell. In order to increase the SINR of valid signals, in this embodiment, the uplink transmit power is increased, and when the UE capable of transmitting uplink in the DL slot transmits uplink in the DL slot, full power (first uplink transmit power) is used for transmission. Specifically:
when the terminal performs power adjustment based on a TPC command, a downlink slot for uplink transmission is not considered; and the terminal performs the power control method provided by the present disclosure only in the downlink slot for uplink transmission, and works according to a traditional UL PC mechanism in UL slots or UL symbols.

Based on the above method, when the enhanced duplex terminal sends uplink information in a DL slot, the enhanced duplex terminal will send the uplink channel or signal (that is, uplink information) based on maximum uplink transmit power supported by or configured to the enhanced duplex terminal. When uplink transmission is performed on a UL slot or a UL symbol, uplink transmission is performed according to power configured by a higher layer and/or dynamically indicated by a base station.

In this embodiment, assuming that the terminal is a class 3 terminal, that is, the maximum supported uplink transmit power is the first uplink transmit power, specifically 23 dBm. It is assumed that UL DL TDD configuration is DDDSU, referring to FIG. 9, and an UL subband for uplink transmission is configured in the first DL slot.

In a specific example, it is assumed that the terminal determines, based on indication information of the base station, to perform uplink transmission in slot #4 at transmit power of 10 dBm. Meanwhile, the terminal sends uplink information on some resources of the slot #5 according to scheduling or configuration, and in this case, the terminal sends uplink information on the DL slot at full power of 23 dBm, without considering the first signaling, that is, without considering the TPC command. On flexible slot #8, the terminal sends uplink information. The slot #8 is a non-DL slot, and power adjustment needs to be performed according to the TPC command sent by the base station. When the terminal adjusts the uplink transmit power, a reference thereof is transmit power used for sending uplink information in a previous non-DL slot. Assuming that the base station sends a TPC command for increasing the transmit power by 3 dB on slot #7, when the terminal performs uplink transmission on slot #8, the transmit power is 13 dBm.

Embodiment 3: as described in Embodiment 2, the base station indicates the enhanced full-duplex capability terminal through explicit signaling (i.e., the second signaling) to determine the uplink transmit power mechanism when transmitting the uplink information in the DL slot.

Mechanism 1: transmit in the DL slot always at full power. That is, when performing uplink power adjustment, the terminal does not consider uplink transmission sent in the DL slot.

Mechanism 2: the uplink transmit power is determined according to base station configuration and the TPC command, that is, all uplink transmissions need to be considered when the terminal performs uplink power adjustment.

The explicit second signaling includes but is not limited to: DCI, MAC CE, RRC signaling, which is not limited in the present disclosure.

Embodiment 3: assuming that the terminal is a terminal of Rel -18 and subsequent versions, and has a half-duplex capability or an enhanced full-duplex capability, which is not limited in the present disclosure. Assuming that the base station performs an enhanced full-duplex operation in a downlink slot of a time division duplex (TDD) frequency band, that is, schedules downlink data and uplink data simultaneously. When the base station side performs the enhanced full-duplex operation, one of following manners is adopted, which is not limited in the present disclosure.

Frequency-domain resources used for DL transmission and UL transmission in the DL slot are independent of each other without overlapping, for example, as shown in FIG. 8A.

Frequency-domain resources used for DL transmission and UL transmission in the DL slot completely coincide, for example, as shown in FIG. 8B.

Frequency-domain resources used for DL transmission and UL transmission in the DL slot are partially overlapped, for example, as shown in FIG. 8C.

In this embodiment, assuming that resources for uplink transmission and resources for downlink transmission in the DL slot do not overlap in frequency-domain, for example, as shown in FIG. 8A. For a terminal performing uplink transmission on an UL subband, the terminal may suffer from following two types of strong downlink interference: self-interference of downlink transmission from a current cell; and cross-slot interference of downlink transmission from an adjacent cell.

The interference situation can be simplified SINR = S/(N + I_{Self} + I_{CLI}). S represents valid signal power, N represents system noise, I_{Self} represents self-interference of the present cell, and I_{CLI} represents cross-slot interference from an adjacent cell. In order to improve SINR of valid signals and reduce influence of the above two types of downlink interference, a guard band is defined between a frequency-domain resource for transmitting uplink and a frequency-domain resource for transmitting downlink in a DL slot.

The guard band is used for isolating residual interference caused by frequency leakage, harmonic interference and filter roll-off characteristics from downlink transmission. In the guard band, the base station does not send any downlink channel or downlink signal. In the guard band, the terminal does not send any uplink channel or uplink signal.

The guard band may be determined in a following manner, which is not limited in the present disclosure: the guard band is determined in a manner predefined by a protocol; or the guard band is configured by using RRC signaling sent by a base station.

Embodiment 4, as described in Embodiment 1 to Embodiment 3 above, the method may be performed by a serving base station or an adjacent base station, which is not limited in the present disclosure. The methods described above in Embodiment 1 to Embodiment 3 may be used in combination, which is not limited in the present disclosure.

In the above embodiment, uplink transmission reliability can be effectively improved, and feasibility of full-duplex communication is improved.

Corresponding to the above embodiments of the application function implementation method, the present disclosure further provides embodiments of an application function implementation apparatus.

Referring to FIG. 10A, FIG. 10A is a block diagram of an interference suppression apparatus according to an example embodiment, applied to a terminal, including:
a first transmitting module 1001, configured to perform uplink transmission in a downlink slot by using first uplink transmit power, where the first uplink transmit power is maximum uplink transmit power supported by the terminal at a first power class corresponding to a type of the terminal.

Referring to FIG. 10B, FIG. 10B is a block diagram of an interference suppression apparatus according to an example embodiment, applied to a terminal, including:
a power-class increasing module 1001', configured to increase a transmit power class of the terminal from a first power class to a second power class; and
a second transmitting module 1002', configured to perform uplink transmission in a downlink slot based on the second power class.

Referring to FIG. 11, FIG. 11 is a block diagram of an interference suppression apparatus according to an example embodiment, applied to a terminal, including:
a first determining module 1101, configured to not expect sending data or receiving data on a guard band in a downlink slot for performing uplink transmission, where the guard band is between an uplink frequency-domain resource and a downlink frequency-domain resource in the downlink slot.

Referring to FIG. 12A, FIG. 12A is a block diagram of an interference suppression apparatus according to an example embodiment, applied to a base station, including:
a first receiving module 1201, configured to receive uplink information sent by a terminal in a downlink slot by using first uplink transmit power, where the first uplink transmit power is maximum uplink transmit power supported by the terminal at a first power class corresponding to a type of the terminal.

Referring to FIG. 12B, FIG. 12B is a block diagram of an interference suppression apparatus according to an example embodiment, applied to a base station, including:
a second receiving module 1201', configured to receive uplink information sent by a terminal in a downlink slot based on a second power class after a transmit power class of the terminal is increased from a first power class to the second power class.

Referring to FIG. 13, FIG. 13 is a block diagram of an interference suppression apparatus according to an example embodiment, applied to a base station, including:
a controlling module 1301, configured to not send data or not receive data on a guard band in a downlink slot for performing uplink transmission, where the guard band is between an uplink frequency-domain resource and a downlink frequency-domain resource in the downlink slot.

Since the apparatus embodiments basically correspond to the method embodiments, similar contents can be referred from description in the method embodiments. The apparatus embodiments described above are merely illustrative, where the unit described above as separate components may or may not be physically separate, and the components displayed as the unit may or may not be physical units, that is, may be located in one place, or may be distributed on multiple network units. Some or all of the modules may be selected according to actual needs to achieve the purpose of the present disclosure. Those skilled in the art can understand and implement the present disclosure without making creative efforts.

Correspondingly, the present disclosure further provides a computer-readable storage medium, where the storage medium stores a computer program, and the computer program is used to perform the interference suppression method for the terminal.

Correspondingly, the present disclosure further provides a computer-readable storage medium, where the storage medium stores a computer program, and the computer program is used to perform any one of the interference suppression method for the base station.

Correspondingly, the present disclosure further provides an interference suppression device, including:
a processor; and
a memory for storing a processor-executable instruction;
where the processor is configured to perform the interference suppression method according to any one of the above terminal side.

FIG. 14 is a block diagram of an electronic device 1400 according to an example embodiment. For example, the electronic device 1400 may be a terminal such as a mobile phone, a tablet computer, an e-book reader, a multimedia playing device, a wearable device, an in-vehicle terminal, an iPad, or a smart television.

Referring to FIG. 14, the electronic device 1400 may include one or more of following components: a processing component 1402, a memory 1404, a power component 1406, a multimedia component 1408, an audio component 1410, an input/output (I/O) interface 1412, a sensor component 1416, and a communication component 1418.

The processing component 1402 generally controls overall operations of the electronic device 1400, such as operations associated with display, telephone calls, data communications, camera operations, and recording operations. The processing component 1402 may include one or more processors 1420 to execute instructions to perform all or part of the steps of the interference suppression method described above. In addition, the processing component 1402 may include one or more modules to facilitate interaction between the processing component 1402 and other components. For example, the processing component 1402 may include a multimedia module to facilitate interaction between the multimedia component 1408 and the processing component 1402. For another example, the processing component 1402 may read an executable instruction from a memory, to implement steps of the interference suppression method provided in the above embodiments.

The memory 1404 is configured to store various types of data to support operations on the electronic device 1400. Examples of such data include instructions for any application or method operating on the electronic device 1400, contact data, phonebook data, messages, pictures, videos, and the like. The memory 1404 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disks.

The power component 1406 provides power for various components of the electronic device 1400. The power component 1406 may include a power management system, one or more power sources, and other components associated with generating, managing, and distributing power for the electronic device 1400.

The multimedia component 1408 includes a display screen providing an output interface between the electronic device 1400 and a user. In some embodiments, the multimedia component 1408 includes a front camera and / or a rear camera. When the electronic device 1400 is in an operation mode, such as a photographing mode or a video mode, the front camera and/or the rear camera may receive external multimedia data. Each of the front camera and the rear camera may be a fixed optical lens system or have focal length and optical zoom capability.

The audio component 1410 is configured to output and/or input audio signals. For example, the audio component 1410 includes a microphone (MIC) configured to receive an external audio signal when the electronic device 1400 is in an operation mode, such as a call mode, a recording mode, and a voice recognition mode. The received audio signal may be further stored in the memory 1404 or transmitted via the communication component 1418. In some embodiments, the audio component 1410 further includes a speaker configured to output an audio signal.

The I/O interface 1812 provides an interface between the processing component 1802 and peripheral interface modules, such as keyboards, click wheels, buttons, etc. These buttons may include, but are not limited to, home buttons, volume buttons, start buttons, and lock buttons.

The sensor component 1416 includes one or more sensors for providing status assessments of various aspects of the electronic device 1400. For example, the sensor component 1416 may detect an open/closed state of the electronic device 1400, relative positioning of components (for example, a display and a keypad of the electronic device 1400), a position change of the electronic device 1400 or a component of the electronic device 1400, a presence or absence of user contact with the electronic device 1400, an orientation or acceleration/deceleration of the electronic device 1400, and a temperature change of the electronic device 1400. The sensor component 1416 may include a proximity sensor configured to detect, without any physical contact, the presence of nearby objects. The sensor component 1416 may also include a light sensor, such as a CMOS (Complementary Metal-Oxide-Semiconductor) or CCD (Charge Coupled Device) image sensor, for use in imaging applications. In some embodiments, the sensor component 1416 may further include an acceleration sensor, a gyroscope sensor, a magnetic sensor, a pressure sensor, or a temperature sensor.

The communication component 1418 is configured to facilitate wired or wireless communication between the electronic device 1400 and other devices. The electronic device 1400 may access a wireless network based on a communication standard, such as Wi-Fi, 2G, 3G, 4G, 5G, or 6G, or a combination thereof. In an example embodiment, the communication component 1418 receives a broadcast signal or broadcast related information from an external broadcast management system via a broadcast channel. In an example embodiment, the communication component 1418 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an example embodiment, the electronic device 1400 may be implemented by one or more application specific integrated circuit (ASIC), digital signal processor (DSPs), digital signal processing device (DSPD), programmable logic device (PLD), field programmable gate array (FPGA), controller, micro-controller, microprocessor, or other electronic component, and is configured to perform the above interference suppression method.

In an example embodiment, a non-transitory machine-readable storage medium is further included, such as the memory 1404 including an instruction, where the instruction can be executed by the processor 1420 of the electronic device 1400, so as to perform the interference suppression method described above. For example, the non-transitory computer-readable storage medium may be a ROM (read-only memory), a RAM (random access memory), CD-ROM (compact disc read-only memory), magnetic tape, floppy disk, optical data storage device, or the like.

Correspondingly, the present disclosure further provides an interference suppression device, including:
a processor; and
a memory for storing a processor-executable instruction;
where the processor is configured to perform the interference suppression method according to any one of the above base station side.

As shown in FIG. 15, FIG. 15 is a schematic structural diagram of an interference suppression device 1500 according to an example embodiment. The device 1500 may be provided as a base station. Referring to FIG. 15, the device 1500 includes a processing component 1522, a wireless transmit/receive component 1524, an antenna component 1526, and a signal processing part specific to a wireless interface, and the processing component 1522 may further include at least one processor.

A processor in the processing component 1522 may be configured to perform the interference suppression method described in any one of the above.

Other embodiments of the disclosure will be readily apparent to those skilled in the art upon consideration of the specification and practice of the inventions disclosed herein. The present disclosure is intended to cover any variations, uses, or adaptations of the present disclosure that follow the general principles of the present disclosure and include common knowledge or conventional technical means in the art not disclosed in the present disclosure. The specification and embodiments are to be regarded as examples only, and the true scope and spirit of the present disclosure are indicated by the following claims.

It should be understood that the present disclosure is not limited to the precise structures already described above and shown in the accompanying drawings, and various modifications and changes may be made without departing from the scope thereof. The scope of the present disclosure is limited only by the appended claims.

## Claims

1. An interference suppression method, performed by a terminal, comprising:
performing uplink transmission in a downlink slot by using first uplink transmit power, wherein the first uplink transmit power is maximum uplink transmit power supported by the terminal at a first power class corresponding to a type of the terminal; or
increasing a transmit power class of the terminal from a first power class to a second power class; and
performing uplink transmission in a downlink slot based on the second power class.

2. The method according to claim 1, wherein when the first uplink transmit power is used, the method further comprises:
receiving first signaling, sent by a base station, for performing uplink transmit power adjustment; and
adjusting, based on the first signaling, second uplink transmit power used for uplink transmission in a specified slot, wherein the specified slot comprises the downlink slot for uplink transmission.

3. The method according to claim 2, further comprising:
determining, based on second signaling sent by the base station, that the downlink slot for uplink transmission is not considered when the uplink transmit power adjustment is performed based on the first signaling; or
determining, based on second signaling sent by the base station, that every slot related to uplink transmission is considered when the uplink transmit power adjustment is performed based on the first signaling.

4. The method according to claim 3, wherein the second signaling comprises any one of:
downlink control information, DCI, media access control, MAC, control element, CE, and radio resource control, RRC, signaling.

5. The method according to claim 1, wherein the first uplink transmit power is less than second uplink transmit power, and the second uplink transmit power is maximum uplink transmit power supported by the terminal at a second power class.

6. An interference suppression method, performed by a terminal, comprising:
not expecting sending data or receiving data on a guard band in a downlink slot for performing uplink transmission, wherein the guard band is between an uplink frequency-domain resource and a downlink frequency-domain resource in the downlink slot.

7. The method according to claim 6, further comprising:
determining a frequency-domain resource occupied by the guard band in the downlink slot based on a protocol; or
determining, based on indication of radio resource control, RRC, signaling sent by a base station, a frequency-domain resource occupied by the guard band in the downlink slot.

8. An interference suppression method, performed by a base station, comprising:
receiving uplink information sent by a terminal in a downlink slot by using first uplink transmit power, wherein the first uplink transmit power is maximum uplink transmit power supported by the terminal at a first power class corresponding to a type of the terminal; or
receiving uplink information sent by a terminal in a downlink slot based on a second power class after a transmit power class of the terminal is increased from a first power class to the second power class.

9. The method according to claim 8, further comprising:
sending first signaling to the terminal, wherein the first signaling indicates the terminal to adjust second uplink transmit power used for uplink transmission in a specified slot, and the specified slot comprises the downlink slot for uplink transmission.

10. The method according to claim 9, further comprising:
sending second signaling to the terminal, wherein the second signaling indicates the terminal to perform the uplink transmit power adjustment based on the first signaling without considering the downlink slot for uplink transmission, or perform the uplink transmit power adjustment based on the first signaling by considering every slot related to uplink transmission.

11. The method according to claim 10, wherein the second signaling comprises any one of:
downlink control information, DCI, media access control, MAC, control element, CE, and radio resource control, RRC, signaling.

12. The method according to claim 8, wherein the first uplink transmit power is less than second uplink transmit power, and the second uplink transmit power is maximum uplink transmit power supported by the terminal at a second power class.

13. An interference suppression method, performed by a base station, comprising:
not sending data or not receiving data on a guard band in a downlink slot for performing uplink transmission, wherein the guard band is between an uplink frequency-domain resource and a downlink frequency-domain resource in the downlink slot.

14. The method according to claim 13, further comprising:
determining a frequency-domain resource occupied by the guard band in the downlink slot based on a protocol; or
sending a radio resource control, RRC, signaling to a terminal, wherein the RRC signaling indicates a frequency-domain resource occupied by a guard band in the downlink slot.

15. An interference suppression apparatus, applied to a terminal, comprising:
a first transmitting module, configured to perform uplink transmission in a downlink slot by using first uplink transmit power, wherein the first uplink transmit power is maximum uplink transmit power supported by the terminal at a first power class corresponding to a type of the terminal; or
a power-class increasing module, configured to increase a transmit power class of the terminal from a first power class to a second power class; and
a second transmitting module, configured to perform uplink transmission in a downlink slot based on the second power class.

16. An interference suppression apparatus, applied to a terminal, comprising:
a determining module, configured to not expect sending data or receiving data on a guard band in a downlink slot for performing uplink transmission, wherein the guard band is between an uplink frequency-domain resource and a downlink frequency-domain resource in the downlink slot.

17. An interference suppression apparatus, applied to a base station, comprising:
a first receiving module, configured to receive uplink information sent by a terminal in a downlink slot by using first uplink transmit power, wherein the first uplink transmit power is maximum uplink transmit power supported by the terminal at a first power class corresponding to a type of the terminal; or
a second receiving module, configured to receive uplink information sent by a terminal in a downlink slot based on a second power class after a transmit power class of the terminal is increased from a first power class to the second power class.

18. An interference suppression apparatus, applied to a base station, comprising:
a controlling module, configured to not send data or not receive data on a guard band in a downlink slot for performing uplink transmission, wherein the guard band is between an uplink frequency-domain resource and a downlink frequency-domain resource in the downlink slot.

19. A computer-readable storage medium, storing a computer program, wherein the computer program is used to perform the interference suppression method according to any one of claims 1-7.

20. A computer-readable storage medium, storing a computer program, wherein the computer program is used to perform the interference suppression method according to any one of claims 8-14.

21. An interference suppression device, comprising:
a processor; and
a memory for storing a processor-executable instruction;
wherein the processor is configured to perform the interference suppression method according to any one of claims 1-7.

22. An interference suppression device, comprising:
a processor; and
a memory for storing a processor-executable instruction;
wherein the processor is configured to perform the interference suppression method according to any one of claims 8-14.
